# EUROPÄISCHE PATENTSCHRIFT

(11) **EP 1 716 349 B1**
(45) Veröffentlichungstag und Bekanntmachung des Hinweises auf die Patenterteilung: **23.04.2008**
(21) Anmeldenummer: 05707266.2
(22) Anmeldetag: 08.02.2005
(51) Int. Cl.: F16D 48/06

(54) **VERFAHREN ZUR VERHINDERUNG VON LASTWECHSELSCHLÄGEN BEI EINEM KRAFTFAHRZEUG**
METHOD FOR PREVENTING LOAD CHANGE IMPACTS IN A MOTOR VEHICLE
PROCEDE POUR EVITER LES CHOCS DE CHANGEMENT DE CHARGE DANS UN VEHICULE AUTOMOBILE

(30) Priorität: 12.02.2004 DE 102004007160
(43) Veröffentlichungstag der Anmeldung: 02.11.2006
(73) Patentinhaber: Volkswagen Aktiengesellschaft, 38436 Wolfsburg (DE)
(72) Erfinder: BOTHE, Edgar, 31224 Peine (DE); SCHREIBER, Wolfgang, I38550 Isenbüttel (DE)
(74) Vertreter: Hübsch, Dirk
(86) Internationale Anmeldenummer: PCT/EP2005/001269
(87) Internationale Veröffentlichungsnummer: WO 2005/078305

(56) Entgegenhaltungen:
- EP-A- 0 323 070
- DE-A1- 3 918 254
- DE-A1- 10 138 998
- DE-A1- 10 139 558

## Beschreibung

Die Erfindung betrifft ein Verfahren zur Verhinderung von Lastwechselschlägen bei einem Kraftfahrzeug, insbesondere in Folge abrupter Veränderungen der Fahrpedalstellung, wobei zwischen einem Antriebsmotor und einem Getriebe, insbesondere einem Doppelkupplungsgetriebe des Kraftfahrzeuges mindestens eine Kupplung vorgesehen ist, wobei das Getriebe mehrere einlegbare Gangstufen aufweist und wobei die Kupplung hinsichtlich des zu übertragenen Drehmomentes angesteuert wird.

Kraftfahrzeuge mit Getrieben mit Kupplungen, insbesondere Reibkupplungen als Anfahrelement verhalten sich bei Lastwechseln in niedrigen Gängen im allgemeinen unkomfortabler als Kraftfahrzeuge mit Automatikgetrieben bzw. mit dazwischen geschaltetem Drehmomentwandler. Lastwechsel bzw. Lastwechselschläge sind Übergänge zwischen dem Zug- und Schubbetrieb des Antriebsmotors.

In Kraftfahrzeugen mit Handschaltgetrieben finden Lastwechsel in der Regel bei geschlossener Kupplung statt. In diesem Fall wird das Lastwechselverhalten von der Motorsteuerung bestimmt (Lastschlagdämpfung, Anti-Ruckelfunktion). Lastwechsel bei schlupfender Kupplung sind eher selten. Ein Ruck in einer solchen Situation wird in der Regel als Fehlbedienung des Fahrer interpretiert und akzeptiert.

Kraftfahrzeuge mit Automatikgetrieben, die einen hydraulischen Drehmomentwandler als Anfahrelement aufweisen, verhalten sich günstiger. Positive Lastwechsel (vom Schubbetrieb in den Zugbetrieb) werden durch die Ankopplung des Antriebsmotors über den Drehmomentwandler bedämpft. Negative Lastwechsel (vom Zugbetrieb in den Schubbetrieb) sind unkritisch, da über den Drehmomentwandler kein nennenswertes Schubmoment aufgebaut wird. Kraftfahrzeuge mit einem Getriebe und mit einer ansteuerbaren Kupplung, insbesondere einer automatisierten Anfahrkupplung, verhalten sich im Bereich kleiner Fahrgeschwindigkeiten wie Kraftfahrzeuge mit Handschaltgetrieben. Ein Ruck wird bei diesen Fahrzeugen jedoch in keiner Fahrsituation akzeptiert und wirkt daher unkomfortabel. So wird bei bestimmten Getrieben mit einer automatisierten Anfahrkupplung, insbesondere bei einem Doppelkupplungsgetriebe auch ein Fahrkomfort erwartet, der eher dem Fahrkomfort eines konventionellen Automatikgetriebes entspricht als dem Komfort eines Handschaltgetriebes.

So ist ein Verfahren zur Verhinderung von Lastwechselschlägen bei einem Kraftfahrzeug bekannt (DE 39 18 254 A1), bei dem in Folge abrupter Veränderungen der Fahrpedalstellung, bspw. aus einer Schubstellung in eine Laststellung die Kupplung derart angesteuert wird, dass diese mit einem vorgebbaren Schlupf in eine der Position des Fahrpedals zugeordnete Eingriffsstellung gebracht wird. Der Anstieg des von der Kupplung übertragbaren Drehmomentes wird in Abhängigkeit von der Drehzahl und/oder der Beschleunigung des Antriebsmotors gesteuert. Der hier betriebene Steueraufwand ist aber durchaus sehr aufwendig, wobei der Fahrkomfort noch nicht optimal ist.

Folglich sind die bisher im Stand der Technik bekannten Verfahren zur Verhinderung von Lastwechselschlägen bei einem Kraftfahrzeug noch nicht optimal ausgebildet. Einerseits ist der bisher bekannte Steueraufwand sehr aufwendig, wobei auch andererseits der Fahrkomfort noch verbesserungsfähig ist. Dokument EP-A-0323070 beschreibt ein Verfahren nach dem Oberbegriff des Anspruchs 1.

Der Erfindung liegt daher die Aufgabe zugrunde, das eingangs genannte Verfahren derart auszugestalten und weiterzubilden, dass entsprechende Lastwechselschläge bei einem Kraftfahrzeug verhindert sind, insbesondere der Steuerungsaufwand erheblich vereinfacht bzw. minimiert ist, also insbesondere der Fahrtkomfort verbessert ist.

Die zuvor aufgezeigte Aufgabe ist nun dadurch gelöst, dass die Kupplung während des Anfahrvorganges des Kraftfahrzeuges derart angesteuert wird und/oder während des Anfahrvorganges des Kraftfahrzeuges die Gangstufen im Getriebe derart eingelegt werden, so dass die Getriebeeingangswellen-Drehzahl unterhalb der Motor-Leerlauf-Drehzahl liegt.

Weiterhin ist die zuvor aufgezeigte Aufgabe dadurch gelöst, dass die Kupplung während des Brems- oder Ausrollvorganges des Kraftfahrzeuges derart angesteuert wird und/oder die Gangstufen im Getriebe derart eingelegt werden, so dass die Getriebeeingangswellen-Drehzahl unterhalb der Motor-Leerlauf-Drehzahl liegt.

Prinzipiell wird also das erfindungsgemäße Verfahren angewendet insbesondere bei einem Anfahrvorgang des Kraftfahrzeugs, insbesondere nämlich im Zustand des Ankriechens, ohne Betätigung des Fahrpedals (Gaspedal) sowie insbesondere für den Anfahrvorgang "Ankriechen mit Minigas", also bei leichter Betätigung des Fahrpedals, was im folgenden noch ausführlich erläutert wird. Weiterhin ist für den "gegenteiligen" Fahrzustand eines Kraftfahrzeuges, also für den Bremsvorgang bzw. für den Ausrollvorgang des Kraftfahrzeuges das erfindungsgemäße Verfahren gut geeignet. Dem Verfahren liegt der Grundgedanke zugrunde, dass die Kupplung derart angesteuert bzw. betätigt wird und/oder die Gangstufen im Getriebe derart eingelegt werden, so dass die Getriebeeingangswellen-Drehzahl immer knapp unterhalb der Motor-Leerlauf-Drehzahl liegt. Unter dieser Bedingung wird bei einer Rücknahme des Fahrpedals nämlich kein Schubmoment aufgebaut. Das Abtriebsmoment des Getriebestranges, also das Abtriebsmoment an den Antriebsrädern des Kraftfahrzeuges ist immer positiv. Ein Ruck im Kraftfahrzeug wird daher für die Rücknahme des Fahrpedals, also für die Veränderung der Fahrpedalstellung vermieden. Gemäß dieser neuen Realisierung wird vzw. immer eine Gangstufe im Getriebe ausgewählt, bei der die oben beschriebenen Randbedingungen erfüllt sind. Das erfindungsgemäße Verfahren beschäftigt sich daher mit den "Low-Speed-Funktionen" eines Kraftfahrzeuges und soll im folgenden näher beschrieben werden. Im Ergebnis sind aber die eingangs beschriebenen Nachteile vermieden und entsprechende Vorteile erzielt.

Es gibt nun eine Vielzahl von Möglichkeiten das erfindungsgemäße Verfahren in vorteilhafter Art und Weise auszugestalten und weiterzubilden. Hierfür darf zunächst auf die dem Patentanspruch 1 bzw. dem Patenanspruch 7 nachgeordneten Patentansprüche verwiesen werden. Im folgenden sollen nun die bevorzugten Ausführungsbeispiele für das erfindungsgemäße Verfahren anhand der folgenden Zeichnungen und den dazugehörenden Beschreibungen näher erläutert und beschrieben werden. In der Zeichnung zeigt:
- Fig. 1: in einer schematischen Darstellung die Drehzahlen der Getriebeeingangswelle bzw. der Motor-Leerlauf-Drehzahl über der Zeit ohne Betätigung des Fahrpedals bei Fahrt des Kraftfahrzeuges in der Ebene,
- Fig. 2: in einer schematischen Darstellung die Drehzahlen der Getriebeeingangswellen bzw. die Motor-Drehzahl über der Fahrgeschwindigkeit bei verschiedenen Gangstufen-Wechseln ohne Betätigung des Fahrpedals bei Bergabfahrt des Kraftfahrzeuges, und
- Fig. 3: in schematischer Darstellung die Drehzahlen der Getriebeeingangswellen bzw. die Motor-Drehzahl in Abhängigkeit der Fahrgeschwindigkeit bei Gangstufen-Wechseln mit leichter Betätigung des Fahrpedals, nämlich bei "Minigas".

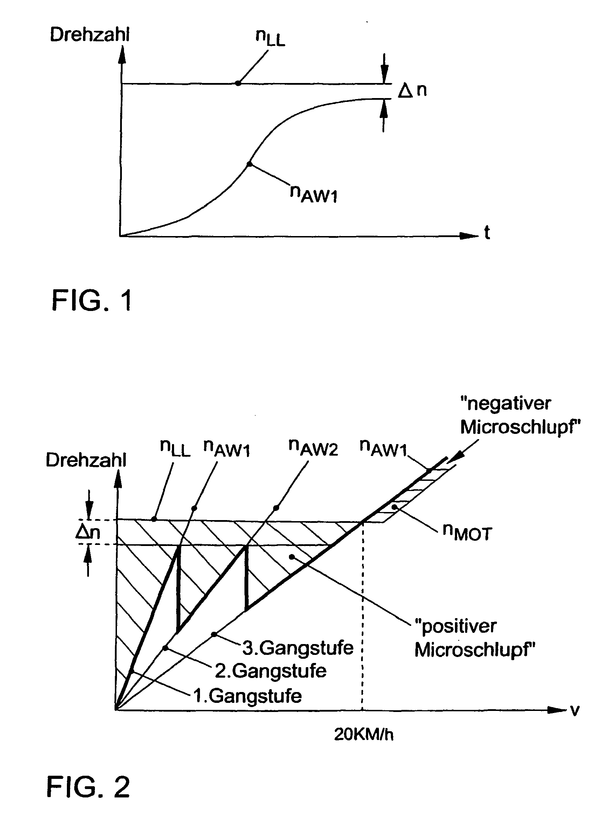

Die Fig. 1 bis 3 verdeutlichen das erfindungsgemäße Verfahren zur Verhinderung von Lastwechselschlägen bei einem nicht dargestellten Kraftfahrzeug. Das hier nicht dargestellte Kraftfahrzeug weist ein Getriebe, vzw. ein automatisches oder automatisiertes Schaltgetriebe auf, insbesondere ein Getriebe das als Doppelkupplungsgetriebe ausgeführt ist. Wie bereits im Stand der Technik bekannt, ist ein entsprechendes Steuergerät, das auf elektronischer und/oder elektrischer Basisrealisiert ist, vorhanden, das auch entsprechende weitere Komponenten, insbesondere einen Mikroprozessor aufweist.

So werden vzw. die Drehzahlen der Antriebsräder bzw. die Drehzahlen der jeweiligen Getriebeeingangswelle und der Getriebeausgangswelle gemessen sowie die Motor-Drehzahl auch entsprechend gemessen. Infolge der Veränderung der Fahrpedalstellung, also des Gaspedals, kann der Fahrer des Kraftfahrzeuges dem Steuergerät entsprechende Informationen zukommen lassen, ob nun eine Beschleunigung des Kraftfahrzeuges oder auch ein Abbremsen des Kraftfahrzeugs, bspw. durch Betätigung des Bremspedals gewünscht wird. Insbesondere infolge abrupter Veränderungen der Fahrpedalstellung kann es im Antriebsstrang des Fahrzeugs zu Lastwechselschlägen kommen, die gemäß dem erfindungsgemäßen Verfahren vermieden werden sollen.

Zwischen dem Antriebsmotor und dem Getriebe des Kraftfahrzeugs ist mindestens eine Kupplung vorgesehen. Ist das Getriebe als Doppelkupplungsgetriebe ausgeführt, so sind jeweils zwei separate Getriebeeingangswellen sowie zwei separate Kupplungen vorgesehen. Das Getriebe weist mehrere einlegbare Gangstufen auf, wobei für den Fall, dass das Getriebe als Doppelkupplungsgetriebe ausgeführt ist, vzw. die erste, dritte und fünfte Gangstufe der ersten Getriebeeingangswelle und die zweite, vierte und sechste Gangstufe der zweiten Getriebeeingangswelle zugeordnet sind. Die Kupplung bzw. die beiden Kupplungen sind hinsichtlich des zu übertragenden Drehmomentes ansteuerbar. Hierfür werden entsprechende, vzw. hydraulisch betätigbare Aktuatoren mit Hilfe des Steuergerätes derart angesteuert, so dass die Schließ- und Öffnungsbewegungen der Kupplung bzw. der Kupplungen entsprechend gesteuert werden bzw. dadurch die Anpresskräfte entsprechend realisiert werden.

Die eingangs genannten Nachteile sind nun dadurch vermieden, dass die Kupplung während des Anfahrvorganges des Kraftfahrzeuges derart angesteuert wird und/oder während des Anfahrvorganges des Kraftfahrzeuges die Gangstufen im Getriebe derart eingelegt werden, so dass die Getriebeeingangswellen-Drehzahl unterhalb der Motor-Leerlauf-Drehzahl liegt.

Weiterhin sind die eingangs genannten Nachteile dadurch vermieden, dass die Kupplung während des Brems- oder Ausrollvorganges des Kraftfahrzeuges derart angesteuert wird und/ oder die Gangstufen im Getriebe derart eingelegt werden, so dass die Getriebeeingangswellen-Drehzahl unterhalb der Motor-Leerlauf-Drehzahl liegt.

Hieraus ist ersichtlich, dass das erfindungsgemäße Verfahren vzw. für den "Low-Speed-Bereich" eines Kraftfahrzeuges gilt bzw. durchgeführt wird, also für den Bereich, wo Fahrzeuggeschwindigkeiten unter vzw. 20 km/h erreicht werden.

Die Fig. 1 zeigt nun ein erstes Ausführungsbeispiel für das erfindungsgemäße Verfahren, nämlich die Darstellung der Drehzahlen über der Zeit t, nämlich die Motor-Leerlauf-Drehzahl n_{LL} und die Getriebeeingangswellen-Drehzahl n_{AW1}. Da für die folgenden Figuren, also für alle Fig. 1 bis 3 das erfindungsgemäße Verfahren anhand eines Doppelkupplungsgetriebes beschrieben wird, sind hier jeweils zwei Getriebeeingangswellen bzw. zwei den jeweiligen Getriebeeingangswellen zugeordnete separate Kupplungen vorgesehen.

Die Fig. 1 zeigt nun den Anfahrvorgang des Kraftfahrzeuges, nämlich den bestimmten Anfahrvorgang "Ankriechen" bei eingelegter erster Gangstufe im Getriebe ohne eine Betätigung des Fahrpedals. Dargestellt ist hier das "Ankriechen" des Kraftfahrzeuges in der Ebene. Gut zu erkennen ist die Motor-Leerlauf-Drehzahl n_{LL} als konstante Drehzahl über der Zeit t. Es ist gut ersichtlich, dass hier bei eingelegter erster Gangstufe die Getriebeeingangswellen-Drehzahl n_{AW1} an die Motor-Leerlauf-Drehzahl n_{LL} herangeführt wird, bis eine vorbestimmte Drehzahldifferenz Δn anliegt. Vzw. beträgt die Drehzahldifferenz Δn=100 Umdrehungen/ Minute, so dass das Kraftfahrzeug konstant kriecht unter Berücksichtigung der Funktion (n_{LL} - Δn)/i_{1ges}, wobei mit "i_{1ges}." die Gesamtübersetzung des ersten Teilgetriebes des Doppelkupplungsgetriebes gemeint ist. Zu einem Spezialfall, bspw. im "Warmlaufprogramm" könnte die Drehzahldifferenz Δn eventuell leicht größer sein, damit die Fahrgeschwindigkeit des Kraftfahrzeuges konstant bleibt. So zeigt also die Fig. 1 das "Ankriechen" des Kraftfahrzeuges bei eingelegter erster Gangstufe ohne Gas in der Ebene.

Es ist auch denkbar, dass das Kraftfahrzeug bei eingelegter erster Gangstufe ohne die Betätigung des Fahrpedals, also ohne Gas gegen den Berg anfährt bzw. anfahren muss. Dann wird die entsprechende Kupplung so angesteuert, dass das "Kriechmoment" bis zu einer maximalen Grenze, vzw. auf 40 Nm erhöht wird, bis die Drehzahldifferenz Δn erreicht ist.

Die Fig. 1 zeigt daher zunächst den prinzipiellen Grundgedanken des Verfahrens, nämlich die Heranführung der Getriebeeingangswellen-Drehzahl n_{AW1} an die Motor-Leerlauf-Drehzahl n_{LL} für den Anfahrvorgang des Kraftfahrzeugs unter zu Hilfenahme der Steuerung der Kupplung, insbesondere der Steuerung des von der Kupplung zu übertragenden Drehmomentes. Die Kupplung wird entsprechend vzw. schlupfgesteuert und/oder schlupfgeregelt und solange bei eingelegter ersten Gangstufe im Getriebe zugefahren/ geschlossen, bis die vorbestimmte Drehzahldifferenz Δn anliegt.

Die Fig. 2 zeigt nun den Anfahrvorgang des Kraftfahrzeugs, insbesondere das "Ankriechen° des Kraftfahrzeugs bei eingelegter erster Gangstufe ohne eine Veränderung der Fahrpedalstellung, allerdings bei Bergabfahrt. Die jeweiligen Drehzahlen sind wiederum auf der Y-Achse und die Fahrgeschwindigkeit v des Kraftfahrzeugs auf der X-Achse dargestellt. Gut ersichtlich ist die konstante Motor-Leerlauf-Drehzahl n_{LL} bzw. die hier eingetragene vorbestimmte Drehzahldifferenz Δn, über einen Bereich der Fahrgeschwindigkeit v. Weiterhin gut ersichtlich sind die Kennlinien bzgl. der unterschiedlichen Gangstufen, also die entsprechenden Getriebeeingangswellen-Drehzahlen n_{AW1} der ersten Getriebeausgangswelle für die erste und dritte Gangstufe und die Getriebeeingangswellen-Drehzahl n_{Aw2} der zweiten Getriebeausgangswelle für die zweite Gangstufe. Es ist gut ersichtlich, dass bei Erreichen der vorbestimmten Drehzahldifferenz Δn bei der jeweils eingelegten Gangstufe, also bei Erreichen einer bestimmten Getriebeeingangswellen-Drehzahl das Getriebe in die nächsthöhere Gangstufe geschaltet wird, gut zu erkennen hier bei dem Wechsel von der ersten Gangstufe zur zweiten Gangstufe. In der nächsthöheren Gangstufe, also dann bei eingelegter zweiter Gangstufe wird die entsprechende - zweite - Kupplung nunmehr so angesteuert, dass die Drehzahl n_{AW2} der - zweiten - Getriebeeingangswelle erhöht wird, so lange bis die Getriebeeingangwellen-Drehzahl n_{Aw2} wiederum an die bestimmte Getriebeeingangswellen-Drehzahl so herangeführt worden ist, dass die vorbestimmte Drehzahldifferenz Δn anliegt. Erst jetzt wird dann wieder von der zweiten Gangstufe in die dritte Gangstufe geschaltet, so dass die Getriebeeingangswellen-Drehzahl n_{AW1} - ersten - Getriebeeingangswelle wieder entsprechend abfällt und von hier aus dann der Anfahrvorgang des Kraftfahrzeugs entsprechend weiter gesteuert wird, nämlich die Getriebeeingangswellendrehzahl n_{Aw2} rasch ansteigt, die Motor-Leerlauf-Drehzahl n_{LL} schneidet und dann mit der Motordrehzahl n_{mot.} weiter ansteigt, so dass erst ab einer Fahrzeuggeschwindigkeit von 20 km/h dann ein "negativer Mikroschlupf" realisiert ist, wohingegen zuvor ein "positiver Schlupf" realisiert war.

Auch bei dem Verfahren gemäß der Fig. 2 beträgt die vorbestimmte Drehzahldifferenz Δn vzw. 100 Umdrehungen/ Minute. Die jeweilige Kupplung wird also immer so gesteuert, d h. teilweise geöffnet bzw. teilweise geschlossen, so dass die durch die Kupplung realisierten Anpresskräfte bzw. die übertragenen Drehmomente so sind, dass die vorbestimmte Drehzahldifferenz Δn erreicht wird bzw. eine bestimmte Getriebeeingangswellen-Drehzahl während des Fahrzustandes "Ankriechen" eben nicht überschritten wird. Bei der Fig. 2 werden vzw. die Wechsel der Gangstufen von der ersten in die zweite Gangstufe bzw. von der zweiten in die dritte Gangstufe nur durchgeführt, wenn die Hangabtriebskraft die Fahrwiderstände des Kraftfahrzeuges übersteigt. Die entsprechende Kupplung vzw. bei einem Doppelkupplungsgetriebe die beiden separaten Kupplungen werden derart schlupfgesteuert, so dass das oben beschriebene Verfahren realisierbar ist.

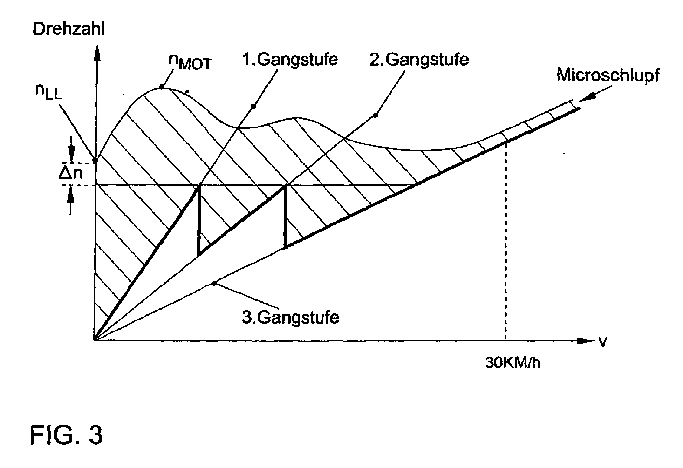

Die Fig. 3 zeigt nun einen Anfahrvorgang des Kraftfahrzeugs, nämlich den Anfahrvorgang "Ankriechen" und Schalten mit "Minigas". Gut zu erkennen ist wiederum, dass auf der Y-Achse die Drehzahlen und auf der X-Achse die Fahrgeschwindigkeit v des Kraftfahrzeugs dargestellt sind. Der wesentliche Unterschied zur Fig. 2 ist nun, dass die Motor-Drehzahl n_{mot.} hier nicht bis zur Fahrgeschwindigkeit 20 km/h wie im Leerlauf konstant verläuft, sondern der Fahrer eben das Fahrpedal entsprechend leicht betätigt, so dass die Motor-Drehzahl n_{mot.} leicht über der Motor-Leerlauf-Drehzahl n_{LL} liegt. Weiterhin dargestellt ist die erste, zweite und dritte Gangstufe des Getriebes bzw. die entsprechenden Kennlinien für diese Gangstufen. Unter der Bezeichnung "Minigas" ist zu verstehen, dass das Fahrpedal hier nur leicht betätigt wird, der Fahrer also nur leicht Gas gibt, nämlich um den Anfahrvorgang des Kraftfahrzeugs zu verwirklichen. Bei "Minigas-Anfahrten" darf die Motordrehzahl nₘₒₜ nicht die aktuelle Drehzahl der jeweiligen Getriebeantriebswelle schneiden. Dies bedeutet, dass im Antriebsstrang nur ein "positiver Schlupf" realisiert ist. Gut zu erkennen ist hier wieder die entsprechende Realisierung des Verfahrens, nämlich dass die jeweilige Kupplung nun derart gesteuert wird, dass bei eingelegter erster Gangstufe die Getriebeeingangswellen-Drehzahl n_{aw1} an die Motor-Leerlauf-Drehzahl n_{LL} herangeführt wird bis die vorbestimmte Drehzahldifferenz Δn erreicht ist bzw. anliegt. Erst dann wird das Getriebe in die nächsthöhere Gangstufe, nämlich in die zweite Gangstufe geschaltet, wobei dann auch hier wieder die Getriebeeingangswellen-Drehzahl n_{AW2} ansteigt und dann, wenn die Getriebeeingangwellen-Drehzahl n_{AW2} der zweiten Gangstufe wiederum den Grenzwert erreicht, die dritte Gangstufe eingelegt wird. Über einer Fahrgeschwindigkeit von mehr als 20 km/h ist dann im wesentlichen der Anfahrvorgang beendet, was in der Fig. 3 ganz rechts entsprechend angedeutet ist, wobei hier dann ein "positiver Mikroschlupf" realisiert ist, also die Motordrehzahl nₘₒₜ knapp über der entsprechenden Getriebeeingangswellen-Drehzahl n_{AW1} der dritten Gangstufe liegt. Hierin liegt übrigens ein Unterschied zu Fig. 2, da bei Fig. 2 ein "negativer Mikroschlupf" realisiert ist, da beim "Ankriechen" ohne Gas bergab dann das Fahrzeug eben den Motor treibt und nicht wie nur der Motor das Fahrzeug das Fahrzeug treibt.

Bei Anfahrten des Kraftfahrzeuges mit etwas mehr als "Minigas" sollte bereits ab der zweiten Gangstufe auf dem Fahrzustand "Fahren mit Mikroschtupf" - wie in der Fig. 3 ganz rechts gezeigt - übergegangen werden.

Denkbar ist auch, dass bei hier nicht dargestellten "Hochlastanfahrten" bereits bei eingelegter erster Gangstufe auf den Fahrzustand mit "Fahren mit Mikroschlupf" übergegangen werden kann.

Sollte der Fahrer - plötzlich - in den Zustand "Normalgas" gehen, wird eine schnelle Rückschaltung von der zweiten in die erste Gangstufe realisiert. Nimmt der Fahrer - im Gegenteil - plötzlich das Gas weg, verändert also die Fahrpedalstellung in Richtung "Null-Lage" wird bei Fahrgeschwindigkeiten unterhalb der jeweiligen Synchrondrehzahl der zweiten Gangstufe ein "positiver Schlupf" durch das Hochschalten in die zweite Gangstufe aufrecht erhalten. Hierzu müsste die entsprechende - andere - separate Kupplung auf dem Schleifpunkt gewesen sein.

Die Fig. 1 und 3 zeigen das erfindungsgemäße Verfahren und das Verhältnis der einzelnen Drehzahlen zur Zeit t bzw. der einzelnen Drehzahlen zur Fahrgeschwindigkeit v des Kraftfahrzeugs, wobei die entsprechende Kupplung immer so angesteuert wird, dass ein entsprechender Schlupf vorhanden ist, so dass die vorbestimmte Drehzahldifferenz Δn zur Motor-Leerlauf-Drehzahl n_{LL} realisiert ist. Bei einem Wechsel der Gangstufen, bspw. von der ersten in die zweite Gangstufe gemäß der Fig. 2 bzw. der Fig. 3 öffnet beim Doppelkupplungsgetriebe die der ersten Getriebeeingangswelle zugeordnete erste Kupplung während die der zweiten Getriebeeingangswelle zugeordnete zweite Kupplung entsprechend schließt. Auch die zweite Kupplung wird dann so gesteuert, dass die Getriebeeingangswellen-Drehzahl der zweiten Getriebeeingangswelle nur bis zu einer bestimmten Getriebeeingangswellen-Drehzahl hochläuft, so dass nämlich die vorbestimmte Drehzahldifferenz Δn zur Motor-Leerlauf-Drehzahl n_{LL} gegeben ist. Das Verfahren wird dann entsprechend mit der Schaltung in die dritte Gangstufe fortgesetzt, so dass - bei einem Doppelkupplungsgetriebe - wieder die der zweiten Getriebeeingangswelle zugeordnete zweite Kupplung öffnet und die der ersten Getriebeeingangswelle zugeordnete erste Kupplung geschlossen wird, wobei die erste Kupplung dann so schlupfgeregelt ist, dass zwar die Getriebeeingangswellen-Drehzahl der ersten Getriebeeingangswelle wiederum bis zu einer bestimmten Getriebeeingangswellen-Drehzahl hochläuft, aber so, dass die vorbestimmte Drehzahldifferenz Δn realisiert ist. Denkbar ist auch, dass Gangstufen übersprungen werden.

Obwohl das erfindungsgemäße Verfahren anhand der Fig. 1 bis 3 vzw. für ein Doppelkupplungsgetriebe geschildert ist, eignet es sich durchaus auch für andere Getriebeformen, wobei bspw. eine Trennkupplung vzw. als Reibkupplung innerhalb des Getriebes vorgesehen ist. Entscheidend ist daher die Ansteuerung der jeweiligen Kupplung und zwar immer so, dass die jeweilige Getriebeeingangswellen-Drehzahl unterhalb der Motor-Leerlauf-Drehzahl n_{LL} liegt.

Das Verfahren kann auch für den umgekehrten Vorgang, also nicht für den Anfahrvorgang eines Kraftfahrzeuges, sondern auch für den Brems- oder Ausrollvorgang eines Kraftfahrzeugs angewendet werden. Hierzu wird die entsprechende Kupplung während des Brems- oder Ausrollvorganges des Kraftfahrzeugs derart gesteuert und die Gangstufen im Getriebe derart eingelegt, so dass die Getriebeeingangswellen-Drehzahl unterhalb der Motor-Leerlauf-Drehzahl nₘₒₜ liegt. Im Ergebnis ergibt sich eine "Umkehrung" der Fig. 3. So wird im Synchronpunkt der dritten Gangstufe dann die der dritten Gangstufe zugeordnete erste Kupplung des Doppelkupplungsgetriebes so weit geöffnet, damit die Fahrwiderstände die Antriebskräfte (Summe aus Kriechmoment und Hangabtriebsmoment) übersteigen und das Kraftfahrzeug langsamer werden kann. Ist das Kriechmoment auf "Null" reduziert und das Kraftfahrzeug wird schneller, wird die erste Kupplung wieder zugefahren, so dass ein Motorschub zum Abbremsen realisiert ist. Wird das Kraftfahrzeug langsamer als die Synchrondrehzahl der zweiten Gangstufe, wird hier die zweite Gangstufe entsprechend eingelegt. Die entsprechende Kupplung wird also immer derart angesteuert, dass dann von der bereits eingelegten - alten - Gangstufe in die - neue - nächstniedrigere Gangstufe geschaltet wird, wobei nach der entsprechenden Synchronisation die bestimmte Getriebeeingangswellen-Drehzahl bei entsprechend eingelegter - neuer - Gangstufe erreicht wird, so dass die vorbestimmte Drehzahldifferenz Δn zur Motor-Leerlauf-Drehzahl n_{LL} anliegt. Hierbei ist auch denkbar, dass beim Herunterschalten Gangstufen übersprungen werden.

Im Ergebnis werden mit dem erfindungsgemäßen Verfahren "insbesondere für den Fahrzustand "Anfahren" bzw. auch für den "Abbremsvorgang" oder den "Ausrollvorgang" eines Kraftfahrzeugs Lastwechselschläge ohne großen Steuerungsaufwand verhindert, also die eingangs genannten Nachteile vermieden und entsprechende Vorteile auf einfache und kostengünstige Weise erzielt.

### BEZUGSZEICHENLISTE

- n_{mot.}: Motor-Drehzahl
- n_{LL}: Motor-Leerlauf-Drehzahl
- n_{AW1}: Getriebeeingangswellen-Drehzahl (erste Getriebeeingangswelle)
- n_{Aw2}: Getriebeeingangswellen-Drehzahl (zweite Getriebeeingangswelle)
- Δn: Drehzahldifferenz
- v: Fahrgeschwindigkeit
- t: Zeit
- i_{1ges}.: Gesamtübersetzung erstes Teilgetriebe

## Patentansprüche

1. Verfahren zur Verhinderung von Lastwechseischlägen bei einem Kraftfahrzeug, insbesondere infolge abrupter Veränderungen der Fahrpedalstellung, wobei zwischen einem Antriebsmotor und einem Getriebe, insbesondere einem Doppelkupplungsgetriebe des Kraftfahrzeuges mindestens eine Kupplung vorgesehen ist, wobei das Getriebe mehrere einlegbare Gangstufen aufweist, wobei die Kupplung hinsichtlich des zu übertragenden Drehmomentes während des Anfahrvorganges des Kraftfahrzeuges derart angesteuert wird und/oder während des Anfahrvorganges des Kraftfahrzeuges die Gangstufen im Getriebe derart eingelegt werden, so dass die Getriebeeingangswellen-Drehzahl (n_{AW1}; n_{AW2}) unterhalb der Motor-Leerlauf-Drehzahl (n_{LL}) liegt, **dadurch gekennzeichnet, dass** bei Erreichen einer vorbestimmten Drehzahldifferenz (Δn) zwischen der Motor-Leerlauf-Drehzahl (n_{LL}) und der Getriebeeingangswellen-Drehzahl, also bei Erreichen einer bestimmten Getriebeeingangswellen-Drehzahl das Getriebe in die nächsthöhere Gangstufe geschaltet wird.

2. Verfahren nach Anspruch 1, **dadurch gekennzeichnet, dass** die Kupplung derart angesteuert wird, dass bei eingelegter erster Gangstufe die Getriebeeingangswellen-Drehzahl (n_{AW1}) an die Motor-Leerlauf-Drehzahl (n_{LL}) herangeführt wird bis die vorbestimmte Drehzahldifferenz (Δn) anliegt.

3. Verfahren nach einem der vorstehenden Ansprüche, **dadurch gekennzeichnet, dass** in der nächsthöheren Gangstufe dann die Getriebeeingangswellendrehzahl (n_{AW1}, n_{AW2}) wiederum an die bestimmte Getriebeeingangswellen-Drehzahl (n_{AW1}; n_{AW2}) herangeführt wird.

4. Verfahren nach einem der vorstehenden Ansprüche, **dadurch gekennzeichnet,** die vorstehenden Verfahrensschritte bis zur Schaltung in die dritte oder bis zur höchsten Gangstufe des Getriebes durchgeführt werden.

5. Verfahren nach einem der vorstehenden Ansprüche, **dadurch gekennzeichnet, dass** die Kupplung schlupfgeregelt wird.

6. Verfahren zur Verhinderung von Lastwechselschlägen bei einem Kraftfahrzeug, insbesondere infolge abrupter Veränderungen der Fahrpedalstellung, wobei zwischen einem Antriebsmotor und einem Getriebe, insbesondere einem Doppelkupplungsgetriebe des Kraftfahrzeuges mindestens eine Kupplung vorgesehen ist, wobei das Getriebe mehrere einlegbare Gangstufen aufweist, wobei die Kupplung hinsichtlich des zu übertragenden Drehmomentes während des Brems- oder Ausrollvorganges des Kraftfahrzeuges derart angesteuert wird und/oder die Gangstufen im Getriebe derart eingelegt werden, so dass die Getriebeeingangswellen-Drehzahl (n_{AW1}; n_{AW2}) unterhalb der Motor-Leerlauf-Drehzahl (n_{LL}) liegt und wobei dann von der bereits eingelegten -alten- Gangstufe in die -neue - nächstniedrigere Gangstufe geschaltet wird, wenn nach der entsprechenden Synchronisation die bestimmte Getriebeeingangswellen-Drehzahl bei entsprechend eingelegter -neuen - Gangstufe erreicht wird, so dass eine vorbestimmte Drehzahldifferenz (Δn) der Getriebeeingangswellen - Drehzahl (n_{AW1}; n_{AW2}) zur Motor-Leerlauf-Drehzahl (n_{LL}) anliegt.

7. Verfahren nach Anspruch 6, **dadurch gekennzeichnet, dass** die Kupplung derart angesteuert wird, dass bei eingelegter Gangstufe die Getriebeeingangswellen-Drehzahl (n_{AW1}; n_{AW2}) unter die Motor-Leerlauf-Drehzahl (n_{LL}) geführt wird.

8. Verfahren nach einem der Ansprüche 6 oder 7, **dadurch gekennzeichnet, dass** sequentiell die jeweils nächstniedrigeren Gangstufen entsprechend eingelegt werden.

9. Verfahren nach einem der Ansprüche 6 bis 8, **dadurch gekennzeichnet, dass** die vorstehenden Verfahrensschritte bis zur Schaltung in die erste Gangstufe des Getriebes durchgeführt werden.

10. Verfahren nach einem der vorstehenden Ansprüche, **dadurch gekennzeichnet, daß** dass die Kupplung schlupfgeregelt wird.

11. Verfahren nach einem der vorstehenden Ansprüche, **dadurch gekennzeichnet, dass** die vorstehenden Verfahrensschritte bei einem Doppelkupplungsgetriebe durchgeführt werden.

12. Verfahren nach Anspruch 11, **dadurch gekennzeichnet, dass** die jeweiligen Gangstufenwechsel mit Hilfe von zwei separaten Kupplungen, die jeweils einer Getriebeeingangswelle zugeordnet sind realisiert werden.

## Claims

1. Method for preventing load change shocks in a motor vehicle, in particular owing to abrupt changes in the accelerator pedal position, wherein at least one clutch is provided between a drive engine and a gearbox, in particular a double clutch gearbox of the motor vehicle, wherein the gearbox has a plurality of gear speeds which can be engaged, wherein the clutch is actuated, in terms of the torque to be transmitted, during the starting process of the motor vehicle and/or the gear speeds are engaged in the gearbox during the starting process of the motor vehicle in such a way that the rotational speed (n_{AW1}; n_{AW2}) of the gearbox input shaft is below the engine idling speed (n_{LL}), **characterized in that** when a predetermined difference (Δn) in rotational speed between the engine idling speed (n_{LL}) and the rotational speed of the gearbox input shaft is reached, that is to say when a specific rotational speed of the gearbox input shaft is reached, the gearbox is shifted into the next highest gear speed.

2. Method according to Claim 1, **characterized in that** the clutch is actuated in such a way that when the first gear speed is engaged the rotational speed (n_{AW1}) of the gearbox input shaft is approximated to the engine idling speed (n_{LL}) until the predetermined difference (Δn) in rotational speed is present.

3. Method according to one of the preceding claims, **characterized in that**, in the next highest gear speed, the rotational speed (n_{AW1}; n_{AW2}) of the gearbox input shaft is then in turn approximated to the specific rotational speed (n_{AW1}; n_{AW2}) of the gearbox input shaft.

4. Method according to one of the preceding claims, **characterized in that** the preceding method steps are carried out until the shifting into the third or as far as the highest gear speed of the gearbox takes place.

5. Method according to one of the preceding claims, **characterized in that** the clutch has anti-slip control.

6. Method for preventing load change shocks in a motor vehicle, in particular owing to abrupt changes in the accelerator pedal position, wherein at least one clutch is provided between a drive engine and a gearbox, in particular a double clutch gearbox of the motor vehicle, wherein the gearbox has a plurality of gear speeds which can be engaged, wherein the clutch is actuated, in terms of the torque to be transmitted, during the braking or coasting process of the motor vehicle and/or the gear speeds are engaged in the gearbox in such a way that the rotational speed (n_{AW1}; n_{AW2}) of the gearbox input shaft is below the engine idling speed (n_{LL}), and wherein the gearbox is shifted from the already engaged, old gear speed into the new, next lowest gear speed if after the corresponding synchronization the specific rotational speed of the gearbox input shaft is reached when a new gear speed is correspondingly engaged so that a predetermined difference (Δn) in rotational speed is present between the rotational speed (n_{AW1}; n_{AW2}) of the gearbox input shaft and the engine idling speed (n_{LL}).

7. Method according to Claim 6, **characterized in that** the clutch is actuated in such a way that when a gear speed is engaged the rotational speed (n_{AW1}; n_{AW2}) of the gearbox input shaft is adjusted below the engine idling speed (n_{LL}).

8. Method according to one of Claims 6 or 7, **characterized in that** the respective next lowest gear speeds are correspondingly engaged sequentially.

9. Method according to one of Claims 6 to 8, **characterized in that** the preceding method steps are carried out up to the shifting operation into the first gear speed of the gearbox.

10. Method according to one of the preceding claims, **characterized in that** the clutch has anti-slip control.

11. Method according to one of the preceding claims, **characterized in that** the preceding method steps are carried out in a double clutch gearbox.

12. Method according to Claim 11, **characterized in that** the respective gear speed changes are implemented using two separate clutches which are each assigned to a gearbox input shaft.

## Revendications

1. Procédé pour éviter les chocs de changement de charge dans un véhicule automobile, notamment suite à des variations brutales de la position de la pédale d'accélération, au moins un embrayage étant prévu entre un moteur d'entraînement et une boîte de vitesses, notamment une boîte de vitesses à double embrayage du véhicule automobile, la boîte de vitesses présentant plusieurs rapports de transmission enclenchables, l'embrayage étant commandé, en termes du couple à transmettre pendant l'opération de démarrage du véhicule automobile, et/ou, pendant l'opération de démarrage du véhicule automobile, les rapports de transmission étant enclenchés dans la boîte de vitesses de telle sorte que la vitesse de rotation de l'arbre d'entrée de la boîte de vitesses (n_{AW1} ; n_{AW2}) soit en dessous de la vitesse de rotation de marche à vide du moteur (n_{LL}), **caractérisé en ce que**, à l'atteinte d'une différence de vitesse de rotation prédéterminée (Δn) entre la vitesse de rotation de marche à vide du moteur (n_{LL}) et la vitesse de rotation de l'arbre d'entrée de boîte de vitesses, c'est-à-dire à l'atteinte d'une vitesse de rotation d'arbre d'entrée de boîte de vitesses déterminée, la boîte de vitesses est commutée au rapport de transmission supérieur.

2. Procédé selon la revendication 1, **caractérisé en ce que** l'embrayage est commandé de telle sorte que lorsque le premier rapport de transmission est enclenché, la vitesse de rotation de l'arbre d'entrée de boîte de vitesses (n_{AW1}) se rapproche de la vitesse de rotation de marche à vide du moteur (n_{LL}), jusqu'à ce que la différence de vitesse de rotation prédéterminée (Δn) soit obtenue.

3. Procédé selon l'une quelconque des revendications précédentes, **caractérisé en ce qu'**au rapport de transmission supérieur, la vitesse de rotation de l'arbre d'entrée de boîte de vitesses (n_{AW1} ; n_{AW2}) se rapproche à nouveau de la vitesse de rotation de l'arbre d'entrée de boîte de vitesses déterminée (n_{AW1} ; n_{AW2}).

4. Procédé selon l'une quelconque des revendications précédentes, **caractérisé en ce que** les étapes de procédé précédentes sont mises en oeuvre jusqu'à la commutation au troisième rapport de transmission ou au rapport de transmission le plus élevé de la boîte de vitesses.

5. Procédé selon l'une quelconque des revendications précédentes, **caractérisé en ce que** l'embrayage est régulé en glissement.

6. Procédé pour éviter les chocs de changement de charge dans un véhicule automobile, notamment suite à des variations brutales de la position de la pédale d'accélération, au moins un embrayage étant prévu entre un moteur d'entraînement et une boîte de vitesses, notamment une boîte de vitesses à double embrayage du véhicule automobile, la boîte de vitesses présentant plusieurs rapports de transmission enclenchables, l'embrayage étant commandé, en termes du couple à transmettre pendant l'opération de freinage ou de ralentissement du véhicule automobile et/ou les rapports de transmission étant enclenchés dans la boîte de vitesses de telle sorte que la vitesse de rotation de l'arbre d'entrée de la boîte de vitesses (n_{AW1} ; n_{AW2}) soit en dessous de la vitesse de rotation de marche à vide du moteur (n_{LL}), puis on passe alors du rapport de transmission ancien déjà enclenché au nouveau rapport de transmission inférieur, si, après la synchronisation correspondante, la vitesse de rotation de l'arbre d'entrée de boîte de vitesses déterminée est atteinte pour un nouveau rapport de transmission correspondant enclenché, de sorte qu'on obtienne une différence de vitesse de rotation prédéterminée (Δn) entre la vitesse de rotation de l'arbre d'entrée de boîte de vitesses (n_{AW1} ; n_{AW2}) et la vitesse de rotation de marche à vide du moteur (n_{LL}).

7. Procédé selon la revendication 6, **caractérisé en ce que** l'embrayage est commandé de telle sorte que lorsque le rapport de transmission est enclenché, la vitesse de rotation de l'arbre d'entrée de boîte de vitesses (n_{AW1} ; n_{AW2}) soit guidée sous la vitesse de rotation de marche à vide du moteur (n_{LL}).

8. Procédé selon l'une quelconque des revendications 6 ou 7, **caractérisé en ce que** les rapports de transmission respectivement plus bas sont séquentiellement enclenchés de manière correspondante.

9. Procédé selon l'une quelconque des revendications 6 à 8, **caractérisé en ce que** les étapes de procédé précédentes sont mises en oeuvre jusqu'à la commutation au premier rapport de transmission de la boîte de vitesses.

10. Procédé selon l'une quelconque des revendications précédentes, **caractérisé en ce que** l'embrayage est régulé en glissement.

11. Procédé selon l'une quelconque des revendications précédentes, **caractérisé en ce que** les étapes de procédé précédentes sont mises en oeuvre dans le cas d'une boîte de vitesses à double embrayage.

12. Procédé selon la revendication 11, **caractérisé en ce que** les changements de rapports de transmission respectifs sont réalisés à l'aide de deux embrayages séparés qui sont à chaque fois associés à un arbre d'entrée de boîte de vitesses.
